# EUROPÄISCHE PATENTSCHRIFT

(11) **EP 1 459 834 B1**
(45) Veröffentlichungstag und Bekanntmachung des Hinweises auf die Patenterteilung: **05.12.2007**
(21) Anmeldenummer: 03006317.6
(22) Anmeldetag: 20.03.2003
(51) Int. Cl.: B23K 26/04

(54) **Verfahren und Anordnung zum Ausrichten eines Laserstrahls**
Arrangement and method for aligning a laser beam
Procédé et arrangement d'alignement d'un faisceau laser

(43) Veröffentlichungstag der Anmeldung: 22.09.2004
(73) Patentinhaber: TRUMPF Laser GmbH + Co. KG, 78713 Schramberg (DE)
(72) Erfinder: Notheis, Thomas, 78712 Schramberg (DE)
(74) Vertreter: Kohler Schmid Möbus

(56) Entgegenhaltungen:
- WO-A-92/08568
- DE-A- 3 247 131
- DE-C- 19 961 625
- US-A- 5 648 847
- US-A- 2002 164 217
- US-B1- 6 334 067

## Beschreibung

Die vorliegende Erfindung betrifft ein Verfahren und eine Anordnung zum Ausrichten eines Lichtstrahls, vorzugsweise Laserstrahls, zu einer Oberfläche.

Aus JP 2000263273 A ist bekannt, eine Austrittsoptik, nämlich eine Laserbearbeitungsoptik, derart auszurichten, dass der Fokuspunkt des aus der Laserbearbeitungsoptik austretenden Bearbeitungslaserstrahls genau auf der Werkstückoberfläche liegt. Dazu wird ein Referenzlaserstrahl mit linienförmigem Querschnitt genutzt, der schräg zum Bearbeitungslaserstrahl verläuft und diesen genau im Fokuspunkt schneidet. Eine CCD-Kamera registriert, wann der Schnittpunkt der beiden Laserstrahlen auf dem Werkstück liegt. Bei diesem Verfahren wird ausschließlich der Abstand zwischen der Austrittsoptik und dem Werkstück eingestellt. Es ist nicht möglich, einen definierten Winkel zwischen dem Bearbeitungslaserstrahl und der Werkstückoberfläche einzustellen. Darüber hinaus birgt die Nutzung des Bearbeitungslaserstrahls zum Ausrichten der Austrittsoptik Gefahren für den Anwender.

Aus DE 199 61 625 C1 ist bekannt, den Abstand und den Winkel zwischen der Austrittsoptik (Laserbearbeitungsoptik) und der Werkstückoberfläche gleichzeitig einzustellen. Dazu wird ein Hilfslaser genutzt, dessen Strahlung als Lichtkegel mit einem Mittelstrahl auf die Werkstückoberfläche gerichtet ist und dort im Auftreffort als kreis- oder ellipsenförmiger Ring mit einem Punkt in der Mitte projiziert wird. Eine schräg zu diesem Hilfslaserstrahl angeordnete CCD-Kamera wertet das auf der Werkstückoberfläche abgebildete Muster in der Weise aus, dass aus der Lage des Mittelpunkts im Kamerabild über Triangulation der Abstand der Bearbeitungsoptik vom Werkstück ermittelt wird. Aus der Form des Rings wird die Neigung der Austrittsoptik zur Werkstückoberfläche bestimmt. Die Anwendung dieses Verfahrens erfordert allerdings eine aufwändige Datenerfassung und -verarbeitung. Das Verfahren ist zudem nicht für die Anwendung bei gekrümmten Werkstückoberflächen geeignet.

Die Aufgabe der vorliegenden Erfindung ist es daher, ein Verfahren und eine Vorrichtung zum Ausrichten eines Lichtstrahls bereitzustellen, mit denen der Lichtstrahl möglichst einfach und für den Anwender ungefährlich zu einer, insbesondere auch gekrümmten, Oberfläche ausgerichtet werden kann.

Diese Aufgabe wird erfindungsgemäß durch ein Verfahren nach Anspruch 1, bzw. eine Anordnung nach Anspruch 4 gelöst.

Wenn beispielsweise der Laserstrahl einer Laserbearbeitungseinheit rechtwinklig oder in einem bestimmten Winkel auf eine insbesondere kleine oder gekrümmte Werkstückoberfläche ausgerichtet werden muss, wird die Austrittsoptik der Laserbearbeitungseinheit z.B. mittels eines Roboters wie folgt zur Werkstückoberfläche ausgerichtet: Zuerst wird der Abstand zwischen Laserbearbeitungseinheit und Werkstückoberfläche auf einen vorbestimmten Abstand, insbesondere auf den Fokusabstand des Bearbeitungslaserstrahls, eingestellt. Dann wird das Abstandselement in dem auf der Werkstückoberfläche angezeigten Auftreffpunkt eines Hilfslaserstrahls auf dem Werkstück befestigt und die Laserbearbeitungseinheit unter Beibehalten des eingestellten Fokusabstands um den Auftreffpunkt verfahren bzw. gedreht, bis der Hilfslaserstrahl eine Stirnfläche des Abstandselements trifft. Steht das Abstandselement rechtwinklig von der Werkstückoberfläche ab, ist der Laserstrahl dann rechtwinklig zur Werkstückoberfläche ausgerichtet, wenn der Laserstrahl mittig auf die Stirnfläche des Abstandselements trifft.

ln einer bevorzugten Verfahrensvariante wird der vorbestimmte Abstand zwischen Austrittsoptik und Oberfläche mittels mindestens eines schräg verlaufenden Referenzlichtstrahls eingestellt, der von der Austrittsoptik ausgeht und den auszurichtenden Lichtstrahl im vorbestimmten Abstand, z.B. im Fokusabstand eines Bearbeitungslaserstrahls, schneidet. Zum Einstellen des vorbestimmten Abstandes werden die Oberfläche und die Austrittsoptik relativ zueinander bewegt, bis der Lichtstrahl auf der Werkstückoberfläche den bzw. jeden Referenzlichtstrahl schneidet.

ln einer weiteren, besonders bevorzugten Verfahrensvariante, die erfindungsgemäß auch in Alleinstellung angewendet werden kann, werden die Oberfläche und die Austrittsoptik zum Einstellen des vorbestimmten Abstandes relativ zueinander bewegt, bis der Auftreffpunkt des Lichtstrahls auf der Oberfläche genau im Schnittpunkt zweier Referenzlichtstrahlen mit linienförmigem Querschnitt liegt, die von der Austrittsoptik ausgehen und den Lichtstrahl im vorbestimmten Abstand schneiden.

ln einer bevorzugten Weiterbildung dieser Verfahrensvariante werden die Oberfläche und die Austrittsoptik relativ zueinander unter Beibehalten des vorbestimmten Abstands um den Auftreffpunkt gedreht, bis sich die auf der Oberfläche abgebildeten Linien der beiden Referenzlichtstrahlen genau unter dem gleichen Winkel schneiden, unter dem sie von der Austrittsoptik ausgehen. Diese Weiterbildung bietet den Vorteil, dass auch ohne Verwendung eines Abstandselements ein gewünschter Abstand zwischen der Austrittsoptik des Lichtstrahls und der Oberfläche und auch ein gewünschter Winkel zwischen dem Lichtstrahl und der Oberfläche eingestellt werden können.

Bei einer bevorzugten Ausführungsform der Anordnung ist das Abstandselement auf der Oberfläche lösbar gehalten, insbesondere durch Unterdruck oder bei magnetischen Werkstoffen durch Magnetkraft. lm letzteren Fall weist das Abstandselement einen Permanentmagneten auf. Der Vorteil des Abstandselements besteht darin, dass es sich auch auf nach innen oder außen gekrümmten Werkstückoberflächen selbstständig zentriert und daher immer z.B. rechtwinklig zur Werkstückoberfläche ausgerichtet ist.

Bei einer weiteren bevorzugten Ausführungsform der Anordnung trägt die Stirnfläche des Abstandselements Referenzkreise für die Winkeleinstellung zwischen Lichtstrahl und Oberfläche. Die Referenzkreise können mit Winkelangaben versehen sein, damit ein definierter Winkel zwischen Lichtstrahl und Oberfläche eingestellt werden kann.

In einer besonders bevorzugten Ausführungsform der Anordnung weist die Austrittsoptik mindestens eine, vorzugsweise zwei Referenzlichtquellen, insbesondere Laserdioden, auf, die jeweils einen Referenzlichtstrahl mit punkt- oder linienförmigem Querschnitt erzeugen, der den auszurichtenden Lichtstrahl im vorbestimmten Abstand schneidet. Durch diesen Schnittpunkt ist der gewünschte Abstand der Austrittsoptik zur Oberfläche z.B. auf den Fokusabstand eines Bearbeitungslasers festgelegt.

ln einer bevorzugten Weiterbildung dieser Ausführungsform ist die bzw. jede Referenzlichtquelle an der Austrittsoptik schwenkbar gelagert. Dies bietet den Vorteil, dass der Schnittpunkt zwischen dem auszurichtenden Lichtstrahl und dem bzw. den Referenzlichtstrahlen frei im Raum definiert werden kann.

ln einer anderen bevorzugten Weiterbildung der Anordnung weist der auszurichtende Lichtstrahl eine andere Farbe, Intensität oder einen anderen Durchmesser als der bzw. die Referenzlichtstrahlen auf, so dass die Unterscheidung zwischen auszurichtendem Lichtstrahl und Referenzlichtstrahlen vereinfacht wird.

In einer ganz besonders bevorzugten Ausführungsform der Anordnung sind alle Lichtstrahlen mit dem menschlichen Auge erkennbar. An einer solchen Ausrichtvorrichtung kann der Anwender die gegenseitige Überlagerung der Strahlen und das Auftreffen des auszurichtenden Lichtstrahls auf die Stirnfläche des Abstandselements einfach erkennen. Es sind keine weiteren technischen Hilfsmittel zur Durchführung des Ausrichtverfahrens notwendig.

ln einer weiteren bevorzugten Ausführungsform der Anordnung weist der auszurichtende Lichtstrahl einen ringförmigen Querschnitt auf, so dass der Schnittpunkt zwischen dem auszurichtenden Lichtstrahl und dem bzw. den Referenzlichtstrahlen einfach erkennbar ist.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Ausführungsbeispiel einer nicht-erfindungsgemäßen Ausrichtvorrichtung mit einer Austrittsoptik für einen zu einer Werkstückoberfläche auszurichtenden Lichtstrahl und mit zwei Referenzlichtquellen;
- Fig. 2a: ein Beispiel für ein auf der Werkstückoberfläche abgebildetes Lichtmuster bei nicht korrekter Abstands- und Winkelausrichtung des auszurichtenden Lichtstrahls;
- Fig. 2b: ein Beispiel für ein auf der Werkstückoberfläche abgebildetes Lichtmuster bei nicht korrekter Winkelausrichtung des auszurichtenden Lichtstrahls;
- Fig. 2c: ein Beispiel für ein auf der Werkstückoberfläche abgebildetes Lichtmuster bei korrekter Abstands- und Winkelausrichtung des auszurichtenden Lichtstrahls;
- Fig. 3: ein Beispiel für ein bei Ablenkung des auszurichtenden Lichtstrahls auf der Oberfläche entstehendes Lichtmuster; und
- Fig. 4: ein Ausführungsbeispiel einer erfindungsgemäßen Ausrichtevorrichtung mit einem Abstandselement für den zu einer Werkstückoberfläche auszurichtenden Lichtstrahl.

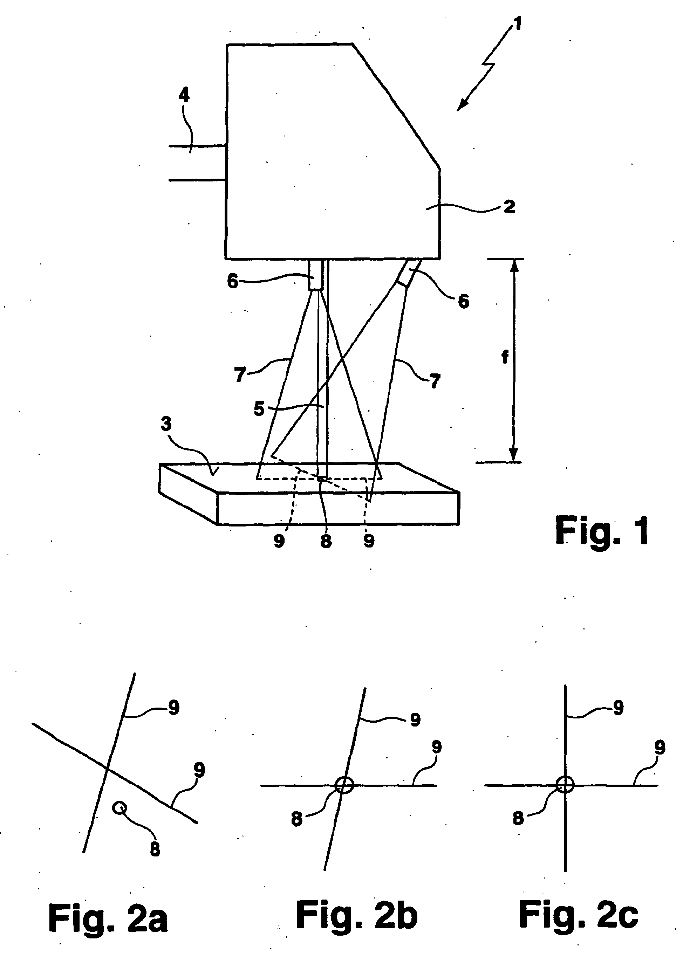

Die in **Fig. 1** dargestellte Ausrichtvorrichtung **1** dient zur Ausrichtung eines Bearbeitungslaserstrahls einer Laserbearbeitungseinheit, von der lediglich eine Austrittsoptik **2** des Bearbeitungslaserstrahls gezeigt ist, bezüglich der Oberfläche 3 eines zu bearbeitenden Werkstücks. Die Austrittsoptik 2 ist mit Hilfe einer Befestigung **4** an eine nicht gezeigte Bewegungseinrichtung, z.B. an einen Roboter, angebunden. Der auszurichtende Lichtstrahl **5** ist ein sichtbarer Hilfslaserstrahl, der anstelle des Bearbeitungslaserstrahls aus der Austrittsoptik 2 austritt und demselben Strahlweg wie der Bearbeitungslaserstrahl folgt. An der Austrittsoptik 2 sind zwei Referenzlichtquellen (Laserdioden) **6** um 90° zueinander versetzt angebracht, die jeweils einen sichtbaren Referenzlaserstrahl **7** mit linienförmigem Querschnitt erzeugen, welcher den Hilfslaserstrahl **5** im Fokusabstand f des Bearbeitungslasers schneidet. Im Fokusabstand f hat der Hilfslaserstrahl 5 einen ringförmigen Strahlquerschnitt mit einem Durchmesser von ca. 4 mm und einer Ringstärke von ca. 1 mm. Auf der Oberfläche 3 werden der Hilfslaserstrahl **5** als Leuchtring 8 und die beiden Referenzlaserstrahlen 7 als sich kreuzende Linien **9** abgebildet.

Der Abstand der Austrittsoptik 2 zum Werkstück 3 wird mittels des Hilfslaserstrahls 5 und der beiden Referenzlaserstrahlen 7 auf den Fokusabstand f des Bearbeitungslaserstrahls eingestellt, indem die Austrittsoptik 2 mittels der Bewegungseinrichtung so weit bewegt wird, bis der abgebildete Leuchtring 8 des Hilfslaserstrahls 5 auf der Werkstückoberfläche 3 genau im Schnittpunkt der beiden sich kreuzenden Linien 9 liegt. Zum rechtwinkligen Ausrichten der Austrittsoptik 2 zur Werkstückoberfläche 3 wird die Austrittsoptik 2 unter Beibehalten des eingestellten Fokusabstands f um den Auftreffpunkt des Hilfslaserstrahls 5 auf die Werkstückoberfläche 3 gedreht, bis sich auf der Werkstückoberfläche 3 die Linien 9 der beiden Referenzlichtstrahlen 7 unter dem gleichen Winkel schneiden, unter dem sie von der Austrittsoptik 2 ausgehen, d.h. 90° im gezeigten Ausführungsbeispiel.

ln **Fig. 2a** ist ein von den Laserstrahlen 5 und 7 auf der Werkstückoberfläche 3 abgebildetes Lichtmuster gezeigt, das entsteht, wenn der Abstand der Austrittsoptik 2 zum Werkstück nicht auf den Fokusabstand f des Bearbeitungslaserstrahls eingestellt ist und der Hilfslaserstrahl 5 nicht rechtwinklig auf die Werkstückoberfläche 3 auftrifft. Der Durchmesser des Leuchtrings 8 ist zu klein, die Linien 9 schneiden sich nicht unter 90°, und ihr Schnittpunkt liegt nicht innerhalb des Leuchtrings 8.

ln **Fig. 2b** ist ein von den Laserstrahlen 5 und 7 auf der Werkstückoberfläche 3 abgebildetes Lichtmuster gezeigt, das entsteht, wenn der Abstand der Austrittsoptik 2 zum Werkstück korrekt auf den Fokusabstand f des Bearbeitungslaserstrahls eingestellt ist, aber der Hilfslaserstrahl 5 nicht rechtwinklig auf die Werkstückoberfläche 3 auftrifft. Der Schnittpunkt der beiden Linien 9 liegt zwar innerhalb des korrekt großen Leuchtrings 8, aber die beiden Linien 9 schneiden sich nicht unter 90°.

Das in **Fig. 2c** gezeigte Lichtmuster entsteht, wenn der Abstand der Austrittsoptik 2 zur Werkstückoberfläche 3 auf den Fokusabstand f des Bearbeitungslaserstrahls eingestellt ist und der Hilfslaserstrahl 5 rechtwinklig auf die Werkstückoberfläche 3 auftrifft. Die Linien 9 schneiden sich unter 90°, und ihr Schnittpunkt liegt genau mittig innerhalb des korrekt großen Leuchtrings 8.

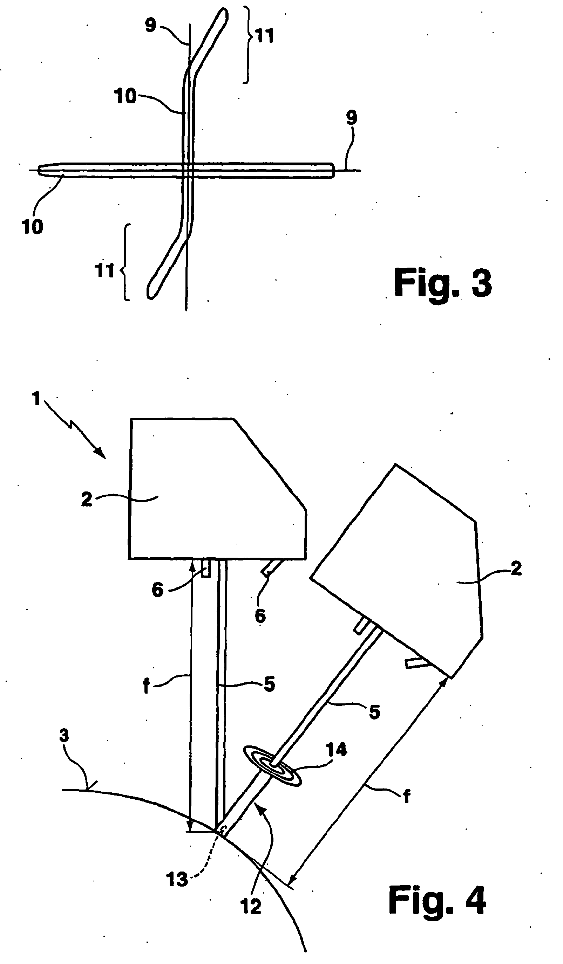

Sofern die Austrittsoptik 2 eine Ablenkeinrichtung, z.B. verschwenkbare Spiegel, zum zweidimensionalen Ablenken des Bearbeitungslaserstrahls aufweist, kann der Hilfslaserstrahl 5 mittels der Ablenkeinrichtung entlang des Linienquerschnitts der Referenzstrahlen 7 abgelenkt werden, ohne dass dabei die Austrittsoptik 2 bewegt werden muss. Wird diese Ablenkung ausreichend schnell wiederholt, sieht der Betrachter den Hilfslaserstrahl 5 auf der Werkstückoberfläche 3 als zwei sich schneidende Doppelspuren **10**, wie in **Fig. 3** gezeigt ist. Wenn die Werkstückoberfläche 3 im Fokusabstand f des Bearbeitungslaserstrahls und rechtwinklig zum Hilfslaserstrahl 5 ausgerichtet ist, liegen die sich schneidenden Linien 9 genau in der Mitte der vom abgelenkten Hilfslaserstrahl 5 auf der Werkstückoberfläche 3 gezeichneten Doppelspuren 10. lst die Werkstückoberfläche 3 nicht eben, so können durch die Ablenkung des Hilfslaserstrahls 5 direkt die Bereiche **11** auf der Werkstückoberfläche **3** erkannt werden, in denen die Abstandsund Winkeleinstellung nicht korrekt ist, da in diesen Bereichen 11 die Doppelspuren 10 des Hilfslaserstrahls 5 von den Linien 9 abweichen.

Die schwenkbare Anbringung der Referenzlichtquellen 6 an der Austrittsoptik 2 ermöglicht es, den Schnittpunkt der Linien 9 auf der Werkstückoberfläche 3 zu verschieben, ohne die Austrittsoptik 1 zu bewegen. Auf diese Weise kann auch dann ein vorbestimmter Abstand zwischen Austrittsoptik 2 und Werkstückoberfläche 3 eingestellt werden, wenn der Hilfslaserstahl 5 schräg aus der Bearbeitungsoptik 1 austritt.

Der Schnittpunkt der beiden auf der Werkstückoberfläche 3 abgebildeten Linien 9 und des Hilfslaserstrahls 5 legt einen Arbeitspunkt im Arbeitsraum der Austrittsoptik 2 fest. Bei der Bearbeitung dreidimensionaler Werkstücke kann daher durch eine veränderte Stellung der Referenzlichtquellen 6 und eine Änderung des Fokusabstands f des Bearbeitungslaserstrahls der gewünschte Schnittpunkt der Linien 9 und des Hilfslaserstrahls 5 und damit der Arbeitspunkt dreidimensional verschoben werden.

Wenn die Austrittsoptik 2 auf eine sehr kleine oder gekrümmte Werkstückoberfläche 3 ausgerichtet werden soll, erfolgt das Ausrichten in drei Schritten, die in **Fig. 4** veranschaulicht sind:
Im ersten Schritt wird, wie oben beschrieben, der Abstand zwischen Austrittsoptik 2 und Werkstückoberfläche 3 mit Hilfe des Hilfslaserstrahls 5 und der Referenzlichtquellen 6 auf den Fokusabstand f des Bearbeitungslaserstrahls eingestellt.
lm zweiten Schritt wird erfindunsgemäß ein stiftförmiges Abstandselement **12** mit einer Länge von z.B. ca. 50-150 mm und einem Durchmesser von z.B. ca. 5-10 mm im Auftreffpunkt des Hilfslaserstrahls 5 auf der Werkstückoberfläche 3, der durch den Leuchtring 8 (Fig. 1) markiert ist, angebracht. Das Abstandselement 12 ist zylinderförmig und hat am unteren Ende einen Stabmagneten **13**, mit dessen Hilfe es am Werkstück 3 gehalten ist. lst das Werkstück nichtmagnetisch, so wird das Abstandselement 12 durch Unterdruck am Werkstück gehalten. Das Abstandselement 12 zentriert sich mit seiner ebenen unteren Stirnseite selbstständig auf der gekrümmten Werkstückoberfläche 3 rechtwinklig zur Werkstückoberfläche 3. Am oberen Ende trägt das Abstandselement 12 eine Scheibe mit Referenzkreisen **14,** die konzentrisch um die Längsachse des Abstandselements 12 verlaufen und mit Winkelangaben versehen sind.
Im dritten Schritt wird die Austrittsoptik 2 unter Beibehalten des eingestellten Fokusabstands f zwischen Austrittsoptik 2 und Auftreffpunkt des Hilfslaserstrahls 5 so weit um den Auftreffpunkt gedreht, bis der Hilfslaserstrahl 5 die Mitte oder einen der Referenzkreise 14 auf der Stirnseite des Abstandselements 12 trifft. lm ersten Fall ist der Hilfslaserstrahl 5 rechtwinklig zur Werkstückoberfläche 3 ausgerichtet, im letzteren Fall unter dem Winkel, der dem getroffenen Referenzkreis 14 zugeordnet ist.

## Patentansprüche

1. Verfahren zum Ausrichten einer für einen Bearbeitungslaserstrahl vorgesehenen Austrittsoptik (2) einer Laserbearbeitungseinheit relativ zu einer mit dem Bearbeitungslaserstrahl zu bearbeitenden Oberfläche (3), wobei anstelle des Bearbeitungslaserstrahls ein Lichtstrahl (5), insbesondere ein sichtbarer Hilfslaserstrahl, aus der Austrittsoptik (2) austritt, **dadurch gekennzeichnet, daß** auf der Oberfläche (3) im Auftreffpunkt des Lichtstrahls (5) ein Abstandselement (12) unter einem vorbestimmten Winkel befestigt wird und wobei die Oberfläche (3) und die Austrittsoptik (2) relativ zueinander unter Beibehalten eines vorbestimmten Abstands (f) zueinander um den Auftreffpunkt gedreht werden, bis der Lichtstrahl (5) eine Stirnfläche des Abstandselements (12) trifft.

2. Verfahren nach Anspruch 1, **dadurch gekennzeichnet, dass** der vorbestimmte Abstand (f) zwischen Austrittsoptik (2) und Oberfläche (3) mittels mindestens eines schräg verlaufenden Referenzlichtstrahls (7) eingestellt wird, der von der Austrittsoptik (2) ausgeht und den auszurichtenden Lichtstrahl (5) im vorbestimmten Abstand (f) schneidet.

3. Verfahren nach Anspruch 1 oder 2, **dadurch gekennzeichnet, dass** die Oberfläche (3) und die Austrittsoptik (2) relativ zueinander bewegt werden, bis der Auftreffpunkt des Lichtstrahls (5) auf der Oberfläche (3) im Schnittpunkt zweier Referenzlichtstrahlen (7) mit linienförmigem Querschnitt liegt, die von der Austrittsoptik (2) ausgehen und den Lichtstrahl (5) im vorbestimmten Abstand (f) schneiden.

4. Anordnung (1) zur Durchführung des Verfahrens nach einem der vorhergehenden Ansprüche,
mit einer für einen Bearbeitungslaserstrahl vorgesehenen Austrittsoptik (2) einer Laserbearbeitungseinheit,
mit einer mit dem Bearbeitungslaserstrahl zu bearbeitenden Oberfläche (3), wobei Austrittsoptik (2) und Oberfläche (3) relativ zueinander bewegbar sind, mit Mitteln zur Herstellung eines Lichtstrahls (5), insbesondere eines sichtbaren Hilfslaserstrahls, der anstelle des Bearbeitungslaserstrahls aus der Austrittsoptik (2) austritt **gekennzeichnet durch** ein auf der Oberfläche (3) in einem zu bearbeitenden Arbeitspunkt des Bearbeitungslaserstrahls unter einem vorbestimmten Winkel befestigten Abstandselement (12), an dem der Lichtstrahl (5) ausgerichtet wird, wobei der Lichtstrahl ausgerichtet ist, wenn er eine Stirnfläche des Abstandselementes trifft.

5. Anordnung nach Anspruch 4, **dadurch gekennzeichnet, dass** das Abstandselement (12) lösbar, insbesondere durch Magnetkraft oder Unterdruck, auf der Oberfläche (3) befestigt ist.

6. Anordnung nach Anspruch 4 oder 5, **dadurch gekennzeichnet, dass** die Stirnfläche des Abstandselements (12) Referenzkreise (14) zur Winkeleinstellung zwischen Lichtstrahl (5) und Oberfläche (3) trägt.

7. Anordnung nach einem der Ansprüche 4 bis 6, **dadurch gekennzeichnet, dass** die Austrittsoptik (2) mindestens eine, vorzugsweise zwei Referenzlichtquellen (6), insbesondere Laserdioden, aufweist, die jeweils einen Referenzlichtstrahl (7) mit punkt- oder linienförmigem Querschnitt erzeugen, der den Lichtstrahl (5) in einem vorbestimmten Abstand (f) schneidet.

8. Anordnung nach Anspruch 7, **dadurch gekennzeichnet, dass** die bzw. jede Referenzlichtquelle (6) an der Austrittsoptik (2) schwenkbar gelagert ist.

9. Anordnung nach Anspruch 7 oder 8, **dadurch gekennzeichnet, dass** der auszurichtende Lichtstrahl (5) eine andere Farbe, Intensität oder einen anderen Durchmesser als der bzw, die Referenzlichtstrahlen (7) aufweist.

10. Anordnung nach einem der Ansprüche 7 bis 9, **dadurch gekennzeichnet, dass** alle Lichtstrahlen (5, 7) sichtbar sind.

11. Anordnung nach einem der Ansprüche 4 bis 10, **dadurch gekennzeichnet, dass** der auszurichtende Lichtstrahl (5) einen ringförmigen Querschnitt aufweist.

## Claims

1. Method for orientating an optical outlet unit (2) which is provided for a processing laser beam of a laser processing unit relative to a surface (3) which is to be processed with the processing laser beam, with a light beam (5), in particular a visible auxiliary laser beam, being discharged from the optical outlet unit (2) in place of the processing laser beam, **characterised in that** a spacer element (12) is secured at a predetermined angle to the surface (3) at the impact point of the light beam (5), and the surface (3) and the optical outlet unit (2) being rotated relative to each other about the impact point with a predetermined spacing (f) from each other being maintained until the light beam (5) strikes an end face of the spacer element (12).

2. Method according to claim 1, **characterised in that** the predetermined spacing (f) between the optical outlet unit (2) and the surface (3) is adjusted by means of at least one obliquely extending reference light beam (7) which is discharged from the optical outlet unit (2) and which intersects with the light beam (5) to be orientated with the predetermined spacing (f).

3. Method according to claim 1 or 2, **characterised in that** the surface (3) and the optical outlet unit (2) are moved relative to each other until the impact point of the light beam (5) is located on the surface (3) at the point of intersection of two reference light beams (7) which have a linear cross-section and which extend from the optical outlet unit (2) and which intersect with the light beam (5) with the predetermined spacing (f).

4. Arrangement (1) for carrying out the method according to any one of the preceding claims,
having an optical outlet unit (2) which is provided for a processing laser beam of a laser processing unit,
having a surface (3) which is to be processed with the processing laser beam, with the optical outlet unit (2) and the surface (3) being movable relative to each other,
having means for producing a light beam (5), in particular a visible auxiliary laser beam which is discharged from the optical outlet unit (2) in place of the processing laser beam,
**characterised by** a spacer element (12) which is secured at a predetermined angle to the surface (3) in an operating location of the processing laser beam to be processed and relative to which the light beam (5) is orientated, with the light beam being orientated when it strikes an end face of the spacer element.

5. Arrangement according to claim 4, **characterised in that** the spacer element (12) is secured to the surface (3) in a releasable manner, in particular by magnetic force or reduced pressure.

6. Arrangement according to claim 4 or 5, **characterised in that** the end face of the spacer element (12) carries reference circles (14) in order to adjust the angle between the light beam (5) and the surface (3).

7. Arrangement according to any one of claims 4 to 6, **characterised in that** the optical outlet unit (2) has at least one, preferably two, reference light source(s) (6), in particular laser diodes which each produce a reference light beam (7) having a point-like or linear cross-section which intersects with the light beam (5) with a predetermined spacing (f).

8. Arrangement according to claim 7, **characterised in that** the or each reference light source (6) is pivotably supported on the optical outlet unit (2).

9. Arrangement according to claim 7 or 8, **characterised in that** the light beam (5) to be orientated is of a different colour, intensity or has a different diameter to that of the reference light beam(s) (7).

10. Arrangement according to any one of claims 7 to 9, **characterised in that** all the light beams (5, 7) are visible.

11. Arrangement according to any one of claims 4 to 10, **characterised in that** the light beam (5) to be orientated has an annular cross-section.

## Revendications

1. Procédé d'alignement d'une optique de sortie (2) prévue pour un faisceau laser d'usinage d'une unité d'usinage par laser par rapport à une surface (3) à usiner avec le faisceau laser d'usinage, selon lequel, à la place du faisceau laser d'usinage, un faisceau lumineux (5), en particulier un faisceau laser auxiliaire visible, sort de l'optique de sortie (2), **caractérisé en ce qu'**un élément d'écartement (12) est fixé selon un angle prédéfini sur la surface (3) au point d'incidence du faisceau lumineux (5) et que l'on fait tourner la surface (3) et l'optique de sortie (2) l'une par rapport à l'autre autour du point d'incidence en conservant une distance prédéfinie (f) entre elles jusqu'à ce que le faisceau lumineux (5) rencontre une surface frontale de l'élément d'écartement (12).

2. Procédé selon la revendication 1, **caractérisé en ce que** la distance prédéfinie (f) entre optique de sortie (2) et surface (3) est réglée au moyen d'au moins un faisceau lumineux de référence (7) s'étendant obliquement qui part de l'optique de sortie (2) et coupe le faisceau lumineux (5) à aligner à la distance prédéfinie (f).

3. Procédé selon la revendication 1 ou 2, **caractérisé en ce que** la surface (3) et l'optique de sortie (2) sont déplacées l'une par rapport à l'autre jusqu'à ce que le point d'incidence du faisceau lumineux (5) sur la surface (3) se trouve au point d'intersection de deux faisceaux lumineux de référence (7) de section linéaire qui partent de l'optique de sortie (2) et coupent le faisceau lumineux (5) à la distance prédéfinie (f).

4. Dispositif pour réaliser le procédé selon l'une des revendications précédentes,
avec une optique de sortie (2) prévue pour un faisceau laser d'usinage d'une unité d'usinage par laser,
avec une surface (3) à usiner avec le faisceau laser d'usinage, l'optique de sortie (2) et la surface (3) pouvant être déplacées l'une par rapport à l'autre,
avec des moyens pour réaliser un faisceau lumineux (5), en particulier un faisceau laser auxiliaire visible, qui sort de l'optique de sortie (2) à la place du faisceau laser d'usinage,
**caractérisé par** un élément d'écartement (12) fixé selon un angle prédéfini sur la surface (3) à un point de travail à usiner par le faisceau laser d'usinage, sur lequel le faisceau lumineux (5) est aligné, le faisceau lumineux étant aligné quand il rencontre une surface frontale de l'élément d'écartement.

5. Dispositif selon la revendication 4, **caractérisé en ce que** l'élément d'écartement (12) est fixé sur la surface (3) de manière amovible, en particulier par force magnétique ou dépression.

6. Dispositif selon la revendication 4 ou 5, **caractérisé en ce que** la surface frontale de l'élément d'écartement (12) porte des cercles de référence (14) pour le réglage de l'angle entre faisceau lumineux (5) et surface (3).

7. Dispositif selon l'une des revendications 4 à 6, **caractérisé en ce que** l'optique de sortie (2) présente au moins une, de préférence deux sources de lumière de référence (6), en particulier des diodes laser, qui génèrent chacune un faisceau lumineux de référence (7) de section ponctuelle ou linéaire qui coupe le faisceau lumineux (5) à une distance prédéfinie (f).

8. Dispositif selon la revendication 7, **caractérisé en ce que** la ou chaque source de lumière de référence (6) est montée pivotante sur l'optique de sortie (2).

9. Dispositif selon la revendication 7 ou 8, **caractérisé en ce que** le faisceau lumineux (5) à aligner possède une autre couleur, intensité ou un autre diamètre que le ou les faisceau(x) lumineux de référence (7).

10. Dispositif selon l'une des revendications 7 à 9, **caractérisé en ce que** tous les faisceaux lumineux (5, 7) sont visibles.

11. Dispositif selon l'une des revendications 4 à 10, **caractérisé en ce que** faisceau lumineux (5) à aligner présente une section annulaire.
